# EUROPÄISCHE PATENTSCHRIFT

(11) **EP 2 934 734 B1**
(45) Veröffentlichungstag und Bekanntmachung des Hinweises auf die Patenterteilung: **20.02.2019**
(21) Anmeldenummer: 13815717.7
(22) Anmeldetag: 18.12.2013
(51) Int. Cl.: B01F 13/00, B28C 9/04, F16M 1/00, B01J 19/00

(54) **PRODUKTIONSEINRICHTUNG ZUR DURCHFÜHRUNG EINER CHEMISCHEN REAKTION UND VERWENDUNG EINES STANDARD-TRANSPORTCONTAINERS**
PRODUCTION ARRANGEMENT FOR PERFORMING A CHEMICAL REACTION AND USE OF A STANDARD TRANSPORT CONTAINER
DISPOSITIF DE PRODUCTION POUR LA MISE EN OEUVRE D'UNE RÉACTION CHIMIQUE ET UTILISATION D'UN CONTENEUR DE TRANSPORT NORMALISÉ

(30) Priorität: 20.12.2012 DE 102012112816
(43) Veröffentlichungstag der Anmeldung: 28.10.2015
(73) Patentinhaber: Bayer Aktiengesellschaft, 51373 Leverkusen (DE)
(72) Erfinder: FRYE, Lars, 42799 Leichlingen (DE); GÜNTHER, Dietmar, 42499 Hückeswagen (DE); CONZEN, Carsten, 51375 Leverkusen (DE); LIESENFELDER, Ulrich, 51469 Bergisch Gladbach (DE); BOOS, Karl-Robert, 51399 Burscheid (DE); GÜDEL, Wolfgang, 41464 Neuss (DE); KÖCHING, Karl-Hermann, 41540 Dormagen (DE); STEINMEISTER, Ingo, 51377 Leverkusen (DE)
(74) Vertreter: BIP Patents
(86) Internationale Anmeldenummer: PCT/EP2013/077058
(87) Internationale Veröffentlichungsnummer: WO 2014/095976

(56) Entgegenhaltungen:
- DE-A1- 19 958 142
- DE-A1-102008 041 950
- US-A1- 2005 103 684
- US-A1- 2009 093 558

## Beschreibung

Die Arbeiten, die zu dieser Erfindung geführt haben, wurden gemäß der Finanzhilfevereinbarung Nr. 228867 im Zuge des Siebten Rahmenprogramms der Europäischen Union RP7/2007-2013 gefördert.

Die Erfindung betrifft eine Produktionseinrichtung, mit deren Hilfe eine chemische Reaktion durchgeführt werden kann, sowie die Verwendung eines Standard-Transportcontainers, wie er insbesondere zum Transport mit einem LKW und/oder einem Hochsee-Containerschiff genutzt werden kann.

Für die Herstellung eines chemischen Produkts ist es erforderlich für die gewünschte Synthese des herzustellenden chemischen Produkts eine individuell gestaltete Anlagenstruktur zusammenzubauen, um die erforderlichen verfahrenstechnischen Prozessschritte durchführen zu können. Wenn die Herstellung dieses Produkts nicht mehr gewünscht ist, wird die Anlagenstruktur üblicherweise wieder abgerissen oder demontiert, um an der selben Stelle eine andere individuell gestaltete Anlagenstruktur zusammenzubauen, mit der ein anderes chemisches Produkt hergestellt werden kann.

Die DE 10 2008 041 950 A1 beschreibt eine Produktionseinrichtung zur Durchführung einer chemischen Reaktion, mit einem Container zur Aufnahme von mehreren innerhalb des Containers angeordneten Prozessaggregaten zur Unterstützung und/oder Durchführung einer verfahrenstechnischen Grundoperation, und einem innerhalb des Containers angeordneten Versorgungsnetz zur Versorgung der Prozessaggregate mit Stoff und/oder Energie und/oder Information.

Es besteht ein ständiges Bedürfnis den Aufwand zur Durchführung von verschiedenen chemischen Reaktionen zu verringen.

Es ist die Aufgabe der Erfindung Maßnahmen anzugeben, die eine Durchführung von verschiedenen chemischen Reaktionen mit einem geringen Aufwand ermöglichen.

Die Lösung erfolgt erfindungsgemäß durch eine Produktionseinrichtung zur Durchführung einer chemischen Reaktion mit den Merkmalen des Anspruchs 1 sowie eine Verwendung eines Standard-Transportcontainers mit den Merkmalen des Anspruchs 10. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Produktionseinrichtung zur Durchführung einer chemischen Reaktion vorgesehen mit einem Standard-Transportcontainer, insbesondere nach DIN ISO 668, zur Aufnahme von mehreren innerhalb des Standard-Transportcontainers angeordneten Prozessaggregaten zur Unterstützung und/oder Durchführung einer verfahrenstechnischen Grundoperation, und einem innerhalb des Standard-Transportcontainers angeordnetem Versorgungsnetz zur Versorgung der Prozessaggregate mit Stoff und/oder Energie und/oder Information.

Durch das Versorgungsnetz kann innerhalb des Standard-Transportcontainers die Versorgung der Prozessaggregate mit Stoff und/oder Energie und/oder Information sichergestellt werden, so dass innerhalb des Standard-Transportcontainers im Wesentlichen autonom eine chemische Batch-Reaktion und/oder insbesondere eine kontinuierliche Reaktion durchgeführt werden kann. Das Versorgungsnetz kann insbesondere Anschlussmöglichkeiten für Prozessaggregate vorhalten, die über die gesamte Grundfläche des Standard-Transportcontainers verteilt angeordnet sein können. Beispielsweise kann das Versorgungsnetz eine Druckluftleitung aufweisen, die aus einem insbesondere außerhalb des Standard-Transportcontainers vorgesehenen Druckspeicher Druckluft entnehmen kann und mit mehreren über die Grundfläche und/oder das Innenvolumen des Standard-Transportcontainers verteilten Druckluftanschlüssen verbunden ist, so dass ein Druckluft benötigendes Prozessaggregat an nahezu jeder beliebigen Stelle innerhalb des Standard-Transportcontainers positioniert werden kann. Entsprechendes gilt, wenn das Versorgungsnetz beispielsweise ein Speisewasserleitung zur Zufuhr von Wasser, eine Elektroleitung zur Zufuhr von elektrischer Energie, eine Stoffleitung zur Zufuhr von Edukten und/oder Hilfsstoffen und/oder Abfuhr von Produkten und/oder Nebenprodukten und/oder Abfallstoffen, eine Datenleitung zum Austausch von für das Prozessaggregat relevanten Daten, insbesondere zur Steuerung von Reglern zum Betrieb des Prozessaggregats, eine Kühlleitung zur Zufuhr von Kälte beziehungsweise Abfuhr von Wärme und/oder eine Heizleitung zur Zufuhr von Wärme beziehungsweise Abfuhr von Kälte aufweist. Zusätzlich oder alternativ kann innerhalb des Standard-Transportcontainers ein an dem Versorgungsnetz angeschlossener Speicher für Stoff, Energie und/oder Information, beispielsweise ein Druckluftspeicher, ein Vorratsbehälter für flüssige, feste und/oder gasförmige Stoffe und/oder ein Datenträger, vorgesehen sein, so dass die chemische Reaktion innerhalb des Standard-Transportcontainers ganz oder teilweise autonom und unabhängig von einer externen Versorgung erfolgen kann. Über das Versorgungsnetz können insbesondere feste, flüssige und/oder gasförmige Stoffe oder Stoffgemische transportiert werden, die einphasig oder mehrphasig, beispielsweise als Suspension oder Emulsion, vorliegen. Die Prozessaggregate können beispielsweise Funktionalitäten zum Heizen und/oder Kühlen und/oder Vermischen und/oder Trennen und/oder Druckregelen und/oder Belüften und/oder Entlüften aufweisen, die es ermöglichen eine chemische Reaktion durchzuführen und beabsichtigte Reaktionsbedingungen zu regeln. Durch das innerhalb des Standard-Transportcontainers angeordnete Versorgungsnetz kann die Verfügbarkeit von Stoff und/oder Energie und/oder Information über einen großen Bereich des Standard-Transportcontainers sichergestellt werden, so dass es möglich ist den selben Standard-Transportcontainer mit dem selben Versorgungsnetz für unterschiedliche Zusammenstellungen von Prozessaggregaten wiederzuverwenden und bei einem Umbau zur Durchführung einer anderen chemischen Reaktion lediglich die Prozessaggregate auszuwechseln, so dass die Durchführung von verschiedenen chemischen Reaktionen mit einem geringen Aufwand erfolgen kann.

Der Standard-Transportcontainer, bei dem es sich insbesondere um einen Transportcontainer der Gattung 1C ("20 Fuß Container") nach DIN ISO 668 oder der Gattung 1D ("10 Fuß Container") nach DIN ISO 668 handelt, stellt einen weltweit gebräuchlichen Standard dar, dessen Erstreckung in Längsrichtung, Querrichtung und Höhe im Wesentlichen weltweit standardisiert ist. Bei einer rechteckigen Grundfläche des Innenraums des Standard-Transportcontainer definiert die längere Seite die Längsrichtung und die kürzere Seite die Querrichtung. Ein derartiger Standard-Transportcontainer kann insbesondere zum Transport mit einem LKW und/oder einem Hochsee-Containerschiff genutzt werden. So weist der Innenraum des Standard-Transportcontainer der Gattung 1C eine Länge L_{L} von 5867 mm, eine Breite L_{Q} von 2330 mm und eine Höhe L_{H} von 2197 mm auf, während der Innenraum des Standard-Transportcontainer der Gattung 1D eine Länge L_{L} von 2802 mm, eine Breite L_{Q} von 2330 mm und eine Höhe L_{H} von 2197 mm aufweist. Die verfügbare Stellfläche dieses Standard-Transportcontainers wird in mehrere gleichgroße gedachte logische Flächen unterteilt. Die Standfläche des Prozessaggregats entspricht im Wesentlichen genau dieser logischen Fläche oder einem ganzzahligen Vielfachen dieser logischen Fläche, wobei bei der Bemessung der Standfläche des Prozessaggregats etwas Luft zwischen benachbarten logischen Flächen des Standard-Transportcontainers vorgesehen sein kann ("Spaltmaß").

Das Versorgungsnetz ist insbesondere fest mit dem Standard-Transportcontainer verbunden und ein integraler Bestandteil des Standard-Transportcontainers, der nicht für einen Austausch vorgesehen ist, wenn die Produktionseinrichtung auf eine andere Reaktion umgestellt werden soll. Das Versorgungsnetz kann insbesondere zumindest in Teilen im Wesentlichen unlösbar mit dem Standard-Transportcontainer verbunden sein. Das Versorgungsnetz weist insbesondere mehrere Leitungen für Stoff und/oder Energie und/oder Information auf. Vorzugsweise weist die jeweilige Leitung einen Eingang und mehrere Ausgänge auf, wobei die Ausgänge über die Leitung mit dem gemeinsamen Eingang verbunden sind. Dies ermöglicht es von einer einzigen Quelle und/oder Schnittstelle aus sämtliche Prozessaggregate zu versorgen. Insbesondere kann vorgesehen sein, dass eine bestimmte Leitung zur Versorgung von mehr als einem Prozessaggregat vorgesehen ist. Zusätzlich oder alternativ kann eine bestimmte Art Leitung mehr als einmal vorgesehen sein, so dass die einzelne Leitung entsprechend kleiner und für eine geringere Beanspruchung dimensioniert werden kann, während es möglich ist für einen entsprechend größeren Bedarf diesen Bedarf durch mehr als eine Leitung zu decken. Beispielsweise kann mehr als eine gleichartige Druckluftleitung vorgesehen sein, damit die mehreren gleichartigen Druckluftleitungen für einen kleineren maximalen Volumenstrom ausgelegt sein können. Erforderlichenfalls kann bei einem entsprechend geringen Bedarf bei einer bestimmten durchzuführenden chemischen Reaktion die nicht benötigte Leitung stillgelegt sein.

Erfindungsgemäß ist das Versorgungsnetz in Schwerkraftrichtung oberhalb der Prozessaggregate zur Versorgung der Prozessaggregate über Kopf angeordnet. Dadurch ist es insbesondere möglich einen Stofftransport vom Versorgungsnetz zu einem Prozessaggregat schwerkraftunterstützt durchzuführen. Beispielsweise kann es ausreichend sein lediglich den Öffnungsquerschnitt und/oder die Öffnungsdauer eines Ventils an einem Ausgang einer Leitung zu regeln, um eine definierte Menge eines Stoffes dem Prozessaggregat zuzudosieren. Insbesondere können Leitungen des Versorgungsnetzes und/oder mit einer Leitung verbundene Vorratsbehälter unter der Decke des Standard-Transportcontainers befestigt werden.

Vorzugsweise weist der Standard-Transportcontainer eine Multikupplung zum Ankuppeln an eine Andockstation einer Backbone-Struktur für den Austausch von Stoff und/oder Energie und/oder Information auf, wobei die Multikupplung, insbesondere über das Versorgungsnetz, mit den Prozessaggregaten verbindbar ist. Besonders bevorzugt ist die Multikupplung zur Zufuhr von Stoff und/oder Energie und/oder Information nur mit dem Versorgungsnetz direkt verbunden, so dass eine Zufuhr an die Prozessaggregate ausschließlich über das Versorgungsnetz erfolgt. Zur Abfuhr von Produkten und/oder Nebenprodukten und/oder Zwischenprodukten und/oder Abfallstoffen kann eine Verbindung der Prozessaggregate mit einem zur Multikupplung separaten Anschluss erfolgen. Es ist aber auch möglich zur Abfuhr von Produkten und/oder Nebenprodukten und/oder Zwischenprodukten und/oder Abfallstoffen eine Verbindung der Prozessaggregate mit der Multikupplung über das Versorgungsnetz oder auch direkt mit der Multikupplung vorzusehen. Der Standard-Transportcontainer kann über die Multikupplung während der Durchführung der chemischen Reaktion angekoppelt bleiben, so dass externe Speichermöglichkeiten und/oder eine externe Prozessleittechnik ("PLT") genutzt werden kann. Es ist aber möglich, dass der Standard-Transportcontainer lediglich zur Vorbereitung der chemischen Reaktion über die Multikupplung angekoppelt wird, um beispielsweise aufladbare Batterien (Akkumulatoren) für eine ausreichende Energieversorgung aufzuladen, ausreichende Mengen an Edukten und Hilfsstoffen zu bunkern und/oder ein Steuerungsprogramm zur Regelung und Durchführung der chemischen Reaktion auf einem geeigneten Datenträger zu speichern. Dies ermöglicht es die chemische Reaktion autonom innerhalb des Standard-Transportcontainers im von der Andockstation abgekoppelten Zustand der Multikupplung an einem anderen Ort durchzuführen. Eine geeignete Multikupplung ist beispielsweise in DE 10 2011 053 800.3 dargestellt, auf deren Inhalt als Teil der Erfindung hiermit Bezug genommen wird.

Besonders bevorzugt ist innerhalb des Standard-Transportcontainers eine Abwasserleitung zur Abfuhr von Abwasser, Produkt oder sonstiger Stoffe vorgesehen, wobei sich die Abwasserleitung durch mindestens zwei designierte Prozessaggregate hindurch erstreckt, wobei die Abwasserleitung mit dem jeweiligen Prozessaggregat verbindbar oder unverbindbar ist. Das Prozessaggregat kann insbesondere einen, vorzugsweise mindestens zwei, aus dem Prozessaggregat seitlich heraus weisenden Rohrflansch aufweisen, über den Teilstücke der Abwasserleitung miteinander verbunden werden können. Nicht mehr benötigte Stoffe und/oder erwünschte Produkte können dadurch vorzugsweise schwerkraftbedingt aus dem Prozessaggregat der Abwasserleitung zugeführt werden, wobei es möglich ist für verschiedene Stoffströme verschiedene Leitungen vorzusehen. Hierbei ist es möglich, dass diese Abwasserleitung von dem Prozessaggregat mitgenutzt wird, indem die Abwasserleitung in geeigneter Form mit dem Prozessaggregat verbunden ist. Insbesondere ist es möglich, dass die Abwasserleitung zur Durchfuhr eines Stoffstroms von einem anderen Prozessaggregat vorgesehen ist. Dadurch kann auch von einem Prozessaggregat, das vergleichsweise weit weg von einem zugehörigen Auslass und/oder einem zugehörigen Speicher positioniert ist, ein Stoffstrom leicht durch dazwischen positionierte andere Prozessaggregate hindurchgeführt werden. Hierfür ist es insbesondere nicht erforderlich eine gesonderte an dazwischen positionierten Prozessaggregaten vorbei geführte Leitung vorzusehen. Stattdessen kann auch ein Prozessaggregat, das diese Abwasserleitung nicht benötigt, einen entsprechenden Teil der erforderlichen Leitungsstrecke bereitstellen. Die Abwasserleitung kann insbesondere mit einem innerhalb des Standard-Transportcontainers vorgesehenen Speicher und/oder mit der Multikupplung oder einem zur Multikupplung verschiedenen separaten Anschluss verbunden sein. Vorzugsweise können die über die jeweilige Abwasserleitung transportierten Stoffe innerhalb des Standard-Transportcontainers gespeichert und nach Durchführung der chemischen Reaktion abgeführt werden.

Insbesondere weist der Standard-Transportcontainer versteifende Querbalken und/oder Längsbalken auf, wobei die Mittellinien der Querbalken um einen Abstand d_{L,min} und/oder die Längsbalken um einen Abstand d_{Q,min} zueinander beabstandet angeordnet sind, wobei die Querbalken und/oder Längsbalken zur Befestigung mit mindestens einem Prozessaggregat hergerichtet sind. Insbesondere entspricht d_{L,min} im Wesentlichem einem ganzzahligen Teil N_{L} einer Erstreckung L_{L} in Längsrichtung eines Innenraums des Standard-Transportcontainers und/oder d_{Q,min} einem ganzzahligen Teil N_{Q} einer Erstreckung L_{Q} in Querrichtung eines Innenraums des Standard-Transportcontainers. Die Prozessaggregate können mit den Querbalken und/oder Längsbalken lösbar verbunden, insbesondere verschraubt, werden. Die Querbalken und/oder Längsbalken können hierbei nicht nur die Funktion erfüllen den Standard-Transportcontainer zu versteifen, sondern auch die Funktion die Gewichtskräfte der Prozessaggregate abzutragen. Dadurch können auch sehr kompakt gebaute Prozessaggregate mit einem vergleichsweise großen Eigengewicht in dem Standard-Transportcontainer verbaut werden.

Vorzugsweise sind innerhalb des Standard-Transportcontainers mehrere mit dem Standard-Transportcontainer befestigte Prozessaggregate zur Durchführung der chemischen Reaktion angeordnet, wobei das jeweilige Prozessaggregat eine Erstreckung d_{L} in Längsrichtung aufweist, die im Wesentlichen einem ganzzahligen Vielfachen Z_{L} von d_{L,min} entspricht und/oder das jeweilige Prozessaggregat eine Erstreckung d_{Q} in Querrichtung aufweist, die im Wesentlichen einem ganzzahligen Vielfachen Z_{Q} von d_{Q,min} entspricht, wobei insbesondere d_{L,min} im Wesentlichem einem ganzzahligen Teil N_{L} einer Erstreckung L_{L} in Längsrichtung eines Innenraums des Standard-Transportcontainers und/oder d_{Q,min} einem ganzzahligen Teil N_{Q} einer Erstreckung L_{Q} in Querrichtung eines Innenraums des Standard-Transportcontainers entspricht. Seitenflächen der Prozessaggregate können in vertikaler Richtung mit den Querbalken und/oder mit den Längsbalken fluchten. Durch die gleichgroßen Abstände der Querbalken und/oder Längsbalken zu einander und der Abstimmung der Erstreckung der Prozessaggregate auf diese Abstände ergibt sich für die Prozessaggregate eine an den Querbalken und/oder Längsbalken orientierte Rasterung, welche eine Positionierung der Prozessaggregate in dem Standard-Transportcontainer in diskreten Abständen vorgibt. Dies erleichtert es einen Teil der Prozessaggregate oder alle Prozessaggregate auszutauschen, um den Standard-Transportcontainer für die Durchführung einer anderen chemischen Reaktion vorzubereiten.

Besonders bevorzugt weist der Standard-Transportcontainer einen mit Lichtgittern abdeckbaren Boden auf, wobei insbesondere der Boden zum Auffangen von ausgelaufenen Flüssigkeiten, vorzugsweise wannenförmig, ausgestaltet ist. Die Lichtgitter können insbesondere auf Querbalken und/oder Längsbalken des Standard-Transportcontainer aufliegen. Vorzugsweise weisen die Lichtgitter in Längsrichtung eine Erstreckung von d_{L,min} und in Querrichtung eine Erstreckung von d_{Q,min} auf, wobei insbesondere d_{L,min} im Wesentlichem einem ganzzahligen Teil N_{L} einer Erstreckung L_{L} in Längsrichtung eines Innenraums des Standard-Transportcontainers und/oder d_{Q,min} einem ganzzahligen Teil N_{Q} einer Erstreckung L_{Q} in Querrichtung eines Innenraums des Standard-Transportcontainers entspricht. Die Erstreckung des Lichtgitters kann dadurch der Erstreckung des kleinsten Prozessaggregats entsprechen, so dass das Lichtgitter leicht durch ein Prozessaggregat ersetzt werden kann, während die übrigen nicht von Prozessaggregaten belegten Rasterplätze des Standard-Transportcontainers von Lichtgittern abgedeckt bleiben können. Bei einem größer dimensionierten Prozessaggregat kann eine entsprechende Anzahl an Lichtgittern, die der Stellfläche dieses Prozessaggregats entspricht, entfernt werden, um das Prozessaggregat mit dem Standard-Transportcontainer zu befestigen. Das Lichtgitter ermöglicht es beabstandet zu dem insbesondere als Auffangwanne für Flüssigkeiten wirkenden Boden das Innere des Standard-Transportcontainers zu betreten. Gleichzeitig erlaubt das Lichtgitter einen Blick auf den Boden, so dass überprüft werden kann, ob beispielsweise infolge einer Fehlfunktion eine Flüssigkeit ausgelaufen ist und sich auf dem Boden sammelt. Vorzugsweise kann in diesem Fall im laufenden Betrieb mindestens ein Lichtgitter entfernt werden, um die ausgelaufenen Flüssigkeiten zu entfernen und/oder den Boden zu reinigen.

Insbesondere weist der Standard-Transportcontainer mindestens ein von außen manipulierbares PLT-Modul zur Beeinflussung der Betriebsweise eines dem PLT-Modul zugeordneten Prozessaggregats auf, wobei der Standard-Transportcontainer und/oder das PLT-Modul vorzugsweise explosionsgeschützt ausgestaltet ist. Mit Hilfe des PLT-Moduls kann die einem Prozessaggregat zugeordnete Prozessleittechnik ("PLT") bedient werden. Beispielsweise können Regelparameter geändert werden, um das zugeordnete Prozessaggregat für die Durchführung einer anderen chemischen Reaktion umzustellen und/oder im laufenden Betrieb die Produktionsweise zu ändern. Hierbei ist es nicht erforderlich den Standard-Transportcontainer zu betreten, wodurch eine unabsichtliche Beschädigung von Prozessaggregaten und eine nachteilige Beeinflussung der chemischen Reaktion durch Unachtsamkeiten vermieden sind. Insbesondere können elektrische Schaltungen des PLT-Moduls außerhalb eines explosionsgeschützten Bereichs des Standard-Transportcontainers positioniert werden, so dass die Arbeitssicherheit erhöht ist. Ferner können bei der Bedienung des PLT-Moduls elektrische Entladungen und/oder elektrische Funken nur außerhalb des explosionsgeschützten Bereichs des Standard-Transportcontainers auftreten, so dass die Gefahr durch die Bedienung elektrischer Geräte in einer explosiven Atmosphäre eine Explosion auszulösen reduziert ist. Das PLT-Modul kann beispielsweise an der Außenseite des Standard-Transportcontainers vorgesehen sein und eine Öffnungsmöglichkeit nach außen aufweisen, so dass vor der Inbetriebnahme erforderliche Einstellungen vorgenommen werden können und nach den Einstellungen das PLT-Modul insbesondere derart geschlossen werden kann, dass das PLT-Modul im geschlossenen Zustand explosionsgeschützt ist. Vorzugsweise ist mindestens eine Datenleitung vorgesehen, über die Signale in einen explosionsgeschützen Bereich, beispielsweise ein ausreichend abgesicherter separater Raum, durchgeschleust werden können. Dies ermöglicht es auch nach der Inbetriebnahme Einstellungen bei dem PLT-Modul durchzuführen ohne sich einer Explosionsgefahr aussetzen zu müssen. Für die explosionsgeschütze Ausgestaltung des Standard-Transportcontainers und/oder des PLT-Moduls kann insbesondere rostfreier Stahl verwendet werden, so dass Materialien auf der Basis von Aluminium vermieden werden können.

Vorzugsweise weist der Standard-Transportcontainer Befestigungsstellen zur Befestigung eines gleichartig dimensionierten zusätzlichen Standard-Transportcontainers und/oder eines Zusatzaggregats, insbesondere Kryoanlage, oberhalb, unterhalb und/oder seitlich mit dem Standard-Transportcontainer auf, wobei insbesondere eine Zusatz-Multikupplung zum Austausch von Stoff und/oder Energie und/oder Information des zusätzlichen Standard-Transportcontainers und/oder des Zusatzaggregats mit den Prozessaggregaten vorgesehen ist. Bei den Befestigungsstellen kann es sich beispielsweise um Steckverbindungen handeln, die für das Stapeln von Standard-Transportcontainer gemäß DIN ISO 668 sowieso vorgesehen sein können. Vorzugsweise kann die Einstecktiefe dieser Steckverbindungen vergrößert sein und/oder es können zusätzliche, vorzugsweise gleichartig ausgestaltete, Steckverbindungen vorgesehen sein, um die Stabilität der Verbindung zu erhöhen. Zusätzlich oder alternativ können an den Befestigungsstellen Klemmen vorgesehen sein, um einen möglichst großflächigen Kontakt zu ermöglichen. Dies ermöglicht es insbesondere einen Wärmeaustausch über eine Deckenwand des Standard-Transportcontainer vorzusehen, ohne hierfür einen Durchbruch vorsehen zu müssen. Durch die Verbindung von mehr als einem Standard-Transportcontainers und der Möglichkeit einen Austausch von Stoff und/oder Energie und/oder Information über die Zusatz-Multikupplung vorzusehen, kann das Innenvolumen von zwei und mehr miteinander verbundener Standard-Transportcontainer für die Positionierung und Verschaltung von Prozessaggregaten genutzt werden, so dass auch apparateintensive chemische Reaktionen realisiert werden können. Vorzugsweise kann der zusätzliche Standard-Transportcontainer und/oder das Zusatzaggregat Speicherbehälter für einzelne Stoffe, insbesondere Edukte, Hilfsstoff, Produkte, Nebenprodukte, Abfallstoffe aufweisen, wobei der mindestens eine Speicherbehälter vorzugsweise oberhalb der Produktionseinrichtung vorgesehen ist. Vorzugsweise erfüllt in diesem Fall der zusätzliche Standard-Transportcontainer und/oder das Zusatzaggregat ausschließlich eine Speicherfunktion für Stoff, Energie und/oder Information ohne selbst verfahrenstechnische Grundoperationen zur Durchführung der chemischen Reaktion auszuführen. Dies erleichtert es im laufenden Betrieb der Produktionseinrichtung den Standard-Transportcontainer und/oder das Zusatzaggregat auszutauschen und die Produktionseinrichtung für die Umwandlung größerer Stoffmengen zu verwenden. Es ist aber auch möglich mehrere Produktionseinrichtung mit oder ohne Zusatz-Transportcontainer über die Zusatz-Multikupplung und/oder weitere Anschlüsse miteinander zu verbinden, beispielsweise um eine einsprechend apparateintensive chemische Reaktion durchführen zu können und/oder eine Kaskadierung von Verfahrensschritten durch eine entsprechend hohe Anzahl an Prozessaggregaten vorzusehen.

Die Erfindung betrifft ferner eine Verwendung eines Standard-Transportcontainers, insbesondere nach DIN ISO 668, zur Durchführung einer chemischen Reaktion innerhalb des Standard-Transportcontainers mit einem innerhalb des Standard-Transportcontainers angeordnetem Versorgungsnetz zur Versorgung von Prozessaggregaten mit Stoff und/oder Energie und/oder Information, wobei der Standard-Transportcontainer insbesondere in einer Produktionseinrichtung, die wie vorstehend beschrieben aus- und weitergebildet sein kann, verwendet wird. Durch das innerhalb des Standard-Transportcontainers angeordnete Versorgungsnetz kann die Verfügbarkeit von Stoff und/oder Energie und/oder Information über einen großen Bereich des Standard-Transportcontainers sichergestellt werden, so dass es möglich ist den selben Standard-Transportcontainer mit dem selben Versorgungsnetz für unterschiedliche Zusammenstellungen von Prozessaggregaten wiederzuverwenden und bei einem Umbau zur Durchführung einer anderen chemischen Reaktion lediglich die Prozessaggregate auszuwechseln, so dass die Durchführung von verschiedenen chemischen Reaktionen mit einem geringen Aufwand erfolgen kann. Der Standard-Transportcontainer wird insbesondere durch Durchführung einer kontinuierlichen chemischen Reaktion und/oder einer chemischen Batch-Reaktion verwendet.

Nachfolgend wird die Erfindung unter Bezugnahme auf die anliegenden Zeichnungen anhand eines bevorzugten Ausführungsbeispiels exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Konzeptansicht einer Produktionseinrichtung,
Fig. 2: eine schematische perspektivische Konzeptansicht der Produktionseinrichtung aus Fig. 1 mit verschiedenen konzeptionell dargestellten Prozessaggregaten,
Fig. 3: eine schematische perspektivische vereinfachte Ansicht der Produktionseinrichtung aus Fig. 1 im angedockten Zustand und
Fig. 4: eine schematische perspektivische vereinfachte Ansicht der Produktionseinrichtung aus Fig. 1 mit einem zusätzlichen Standard-Transportcontainer.

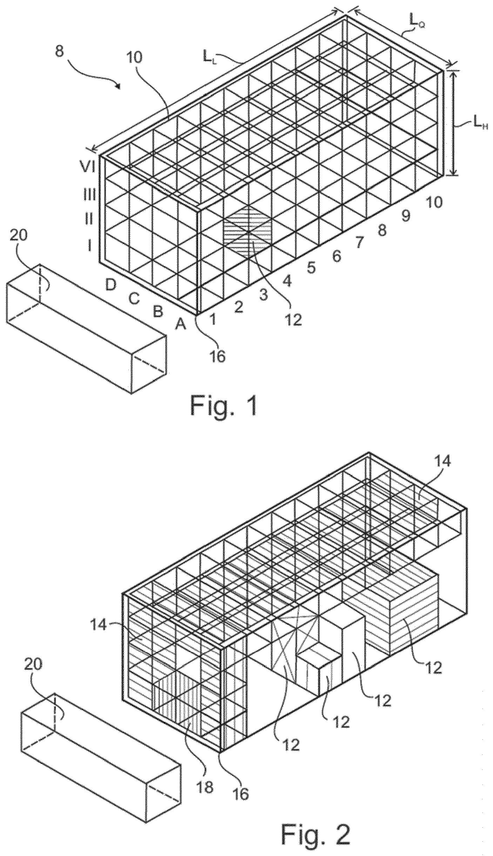

Die in Fig. 1 dargestellte Produktionseinrichtung 8 weist einen Standard-Transportcontainer 10 der Gattung 1C nach DIN ISO 668 auf, dessen Innenraum in Längsrichtung eine Erstreckung von L_{L} = 5867 mm, in Querrichtung eine Erstreckung von L_{Q} = 2300 mm und eine Höhe von L_{H} = 2197 mm aufweist. Die Erstreckung L_{L} in Längsrichtung ist in N_{L} = 10 im Wesentlichen gleich große gedachte logische Einheiten unterteilt, so dass sich für jede logische Einheit eine Strecke in Längsrichtung von im Wesentlichen d_{L,min} = 570 mm ergibt. Die Erstreckung L_{Q} in Querrichtung ist in N_{Q} = 4 im Wesentlichen gleich große gedachte logische Einheiten unterteilt, so dass sich für jede logische Einheit eine Strecke in Querrichtung von ebenfalls im Wesentlichen d_{Q,min} = 570 mm ergibt. Wie in Fig. 2 dargestellt, können in dem Innenraum des Standard-Transportcontainers 10 mehrere Prozessaggregate 12 angeordnet werden, die sich an der gedachten Rasterung des Standard-Transportcontainers 10 orientieren. Das bedeutet, dass jeder der vorgesehenen Prozessaggregate 12 in Längsrichtung eine Erstreckung von d_{L} und in Querrichtung eine Erstreckung von d_{Q} aufweist, die jeweils im Wesentlichen ein ganzzahliges Vielfaches von d_{L,min} beziehungsweise d_{Q,min} ist. Für das Prozessaggregat 12 ist ferner eine minimale Höhe von d_{H,min} = 570 mm vorgegeben, so dass das kleinste Prozessaggregat 12 die Größe eines Würfels mit einer Kantenlänge von 570 mm aufweist. Die Abmessungen jedes verwendeten größeren Prozessaggregats 12 entsprechen im Wesentlichen einem ganzzahligen Vielfachen dieses Würfels.

Durch die Wahl der minimale Höhen für das Prozessaggregat 12 von d_{H,min} = 570 mm kann für das Prozessaggregat 12 eine maximal Höhe vorgesehen werden, die um den Faktor Z_{H} = 3 ein Vielfaches von d_{H,min} sein kann, um noch in den Innenraum des Standard-Transportcontainers 10 zu passen. Dadurch verbleibt in dem dargestellten Ausführungsbeispiel ein oberer Bereich mit einer Höhe von 460 mm. Dieser Bereich ist groß genug, um dort ein Versorgungsnetz 14 vorzusehen, das an nahezu jeder beliebigen Stelle innerhalb des Standard-Transportcontainers 10 über Kopf das jeweilige Prozessaggregat 12 mit Stoff, Energie und/oder Information versorgen kann. Der obere Bereich ist insbesondere frei von Teilen des Prozessaggregats 12. Es ist jedoch möglich, dass das Versorgungsnetz 14 genügend Volumen in dem oberen Bereich frei lässt, dass ein Prozessaggregat 12 in das freigelassene Volumen des oberen Bereichs hineinragen kann. Das Versorgungsnetz erstreckt sich insbesondere über ein Volumen an einer Stirnseite 16 des Standard-Transportcontainers 10, das der vorgegeben Rasterung entspricht oder eine in Längsrichtung hiervon abweichende Erstreckung aufweisen kann. An dieser Stirnseite 16 des Standard-Transportcontainers 10 kann eine mit dem Versorgungsnetz verbundene Multikupplung 18 vorgesehen sein, über die der Standard-Transportcontainer 10 an eine Andockstation 20 angedockt werden kann. Die Andockstation 20 kann wiederum mit einer Backbone-Struktur verbunden sein, mit der über die Multikupplung 18 und die Andockstation 20 Stoff, Energie und/oder Information ausgetauscht werden kann. Insbesondere kann dadurch die Produktionseinrichtung 8 mit genügend Stoff, Energie und/oder Information versorgt werden, um mit Hilfe der in dem Standard-Transportcontainer 10 vorgesehenen und über das Versorgungsnetz 14 angebundenen Prozessaggregaten 12 eine chemische Reaktion, insbesondere kontinuierliche Reaktion, durchzuführen. Die Produkte und/oder Rest- und Abfallstoffe können nach Durchführung der chemischen Reaktion gegebenenfalls über die Multikupplung 18 und die Andockstation 20 der Backbone-Struktur zugeführt werden. Insbesondere ist es möglich die chemischen Reaktion innerhalb des Standard-Transportcontainers 10 autonom durchzuführen, das heißt der Standard-Transportcontainer 10 kann von der Andockstation 20 getrennt positioniert sein, wenn die chemische Reaktion durchgeführt wird. Es ist aber auch möglich, dass der Standard-Transportcontainer 10 mit der Andockstation 20 verbunden bleibt, insbesondere um eine kontinuierliche chemische Reaktion durchzuführen.

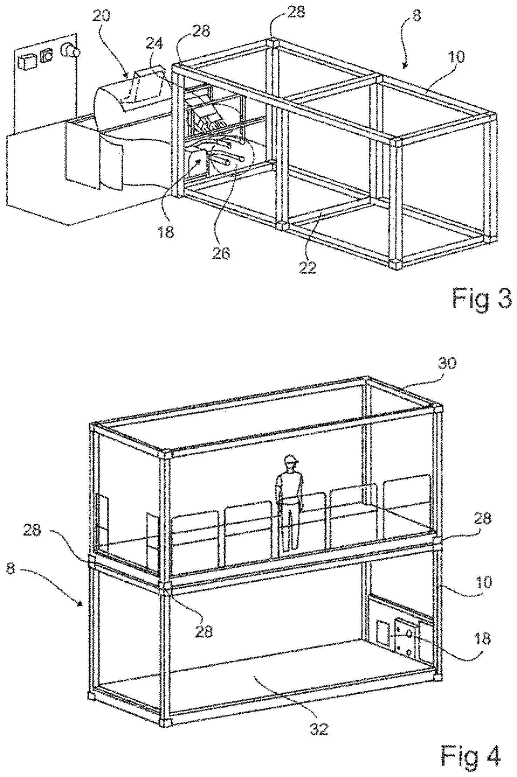

Wie in Fig. 3 dargestellt kann der Standard-Transportcontainer 10 beispielsweise Querbalken 22 aufweisen, die insbesondere in einem Abstand von ca. 570 mm zueinander beabstandet sind. Die Querbalken 22 können den Standard-Transportcontainer 10 versteifen und als Basis zur Befestigung der Prozessaggregate 12 dienen. Im dargestellten Ausführungsbeispiel wird die Multikupplung 18 ausschließlich zum Austausch von Stoffströmen verwendet. Für elektrische Leitungen und Datenleitungen sind gesonderte Elektroanschlüsse 24 vorgesehen, während beispielsweise zum Einfüllen von Edukten und/oder Abführen von Produkten und/oder Abfallstoffen gesonderte Stoffanschlüsse 26 vorgesehen sein können. Über die Multikupplung 18 können beispielsweise gasförmige Stoffe, insbesondere Druckluft mit verschiedenen Nenndrucken, Sauerstoff oder Stickstoff, ausgetauscht werden, während über die gesonderten Stoffanschlüsse 26 vorzugsweise flüssige und/oder gasförmige Stoffe ausgetauscht werden.

Ferner weist der Standard-Transportcontainer 10 Befestigungsstellen 28 auf, um wie in Fig. 4 dargestellt, beispielsweise einen zusätzlichen Standard-Transportcontainer 30 insbesondere oberhalb zur Produktionseinrichtung 8 mit dem Standard-Transportcontainer befestigen zu können. Der zusätzliche Standard-Transportcontainer 30 kann beispielsweise mit dem Versorgungsnetz 14 verbundene Speicherbehälter und/oder eine Wärmeaustauschanlage, insbesondere eine Kryoanlage zur Bereitstellung von Kälte, aufweisen. Der Boden des Standard-Transportcontainers 10 kann durch mehrere auf den Querbalken 22 aufliegende Lichtgitter 32 ausgebildet werden, die entnommen werden können, um an dieser Stelle ein Prozessaggregat 12 mit den Querbalken 22 zu befestigen.

## Patentansprüche

1. Produktionseinrichtung zur Durchführung einer chemischen Reaktion, mit
einem Standard-Transportcontainer (10), insbesondere nach DIN ISO 668, zur Aufnahme von mehreren innerhalb des Standard-Transportcontainers (10) angeordneten Prozessaggregaten (12) zur Unterstützung und/oder Durchführung einer verfahrenstechnischen Grundoperation, und
einem innerhalb des Standard-Transportcontainers (10) angeordnetem Versorgungsnetz (14) zur Versorgung der Prozessaggregate (12) mit Stoff und/oder Energie und/oder Information,
**dadurch gekennzeichnet, dass** das Versorgungsnetz (14) in Schwerkraftrichtung oberhalb der Prozessaggregate (12) zur Versorgung der Prozessaggregate (12) über Kopf angeordnet ist.

2. Produktionseinrichtung nach Anspruch 1 **dadurch gekennzeichnet, dass** durch das Versorgungsnetz (14) die Verfügbarkeit von Stoff und/oder Energie und/oder Information über einen großen Bereich des Standard-Transportcontainers (10) derart sicherstellbar ist, dass es möglich ist, den Standard-Transportcontainer (10) mit dem Versorgungsnetz (14) für unterschiedliche Zusammenstellungen von Prozessaggregaten (12) wiederzuverwenden und bei einem Umbau zur Durchführung einer anderen chemischen Reaktion lediglich die Prozessaggregate (12) auszuwechseln.

3. Produktionseinrichtung nach Anspruch 1 oder 2 **dadurch gekennzeichnet, dass** der Standard-Transportcontainer (10) eine Multikupplung (18) zum Ankuppeln an eine Andockstation (20) einer Backbone-Struktur für den Austausch von Stoff und/oder Energie und/oder Information aufweist, wobei die Multikupplung (18), insbesondere über das Versorgungsnetz (14), mit den Prozessaggregaten (12) verbindbar ist.

4. Produktionseinrichtung nach einem der Ansprüche 1 bis 3 **dadurch gekennzeichnet, dass** innerhalb des Standard-Transportcontainers (10) eine Abwasserleitung zur Abfuhr von Abwasser, Produkt oder sonstiger Stoffe vorgesehen ist, wobei sich die Abwasserleitung durch mindestens zwei designierte Prozessaggregate (12) hindurch erstreckt, wobei die Abwasserleitung mit dem jeweiligen Prozessaggregat (12) verbindbar oder unverbindbar ist.

5. Produktionseinrichtung nach einem der Ansprüche 1 bis 4 **dadurch gekennzeichnet, dass** der Standard-Transportcontainer (10) versteifende Querbalken (22) und/oder Längsbalken aufweist, wobei die Mittellinien der Querbalken (22) um einen Abstand d_{L,min} und/oder die Längsbalken um einen Abstand d_{Q,min} zueinander beabstandet angeordnet sind, wobei die Querbalken (22) und/oder Längsbalken zur Befestigung mit mindestens einem Prozessaggregat (12) hergerichtet sind.

6. Produktionseinrichtung nach einem der Ansprüche 1 bis 5 **dadurch gekennzeichnet, dass** innerhalb des Standard-Transportcontainers (10) mehrere mit dem Standard-Transportcontainer (10) befestigte Prozessaggregate (12) zur Durchführung der chemischen Reaktion angeordnet sind, wobei das jeweilige Prozessaggregat (12) eine Erstreckung d_{L} in Längsrichtung aufweist, die im Wesentlichen einem ganzzahligen Vielfachen Z_{L} von d_{L,min} entspricht und/oder das jeweilige Prozessaggregat (12) eine Erstreckung d_{Q} in Querrichtung aufweist, die im Wesentlichen einem ganzzahligen Vielfachen Z_{Q} von d_{Q,min} entspricht, wobei insbesondere d_{L,min} im Wesentlichem einem ganzzahligen Teil N_{L} einer Erstreckung L_{L} in Längsrichtung eines Innenraums des Standard-Transportcontainers (10) und/oder d_{Q,min} einem ganzzahligen Teil N_{Q} einer Erstreckung L_{Q} in Querrichtung eines Innenraums des Standard-Transportcontainers (10) entspricht.

7. Produktionseinrichtung nach einem der Ansprüche 1 bis 6 **dadurch gekennzeichnet, dass** der Standard-Transportcontainer (10) einen mit Lichtgittern (32) abdeckbaren Boden aufweist, wobei insbesondere der Boden zum Auffangen von ausgelaufenen Flüssigkeiten, vorzugsweise wannenförmig, ausgestaltet ist.

8. Produktionseinrichtung nach einem der Ansprüche 1 bis 7 **dadurch gekennzeichnet, dass** der Standard-Transportcontainer (10) mindestens ein von außen manipulierbares PLT-Modul (Prozessleittechnik-Modul) zur Beeinflussung der Betriebsweise eines dem PLT-Modul zugeordneten Prozessaggregats (12) aufweist, wobei der Standard-Transportcontainer (10) und/oder das PLT-Modul vorzugsweise explosionsgeschützt ausgestaltet ist.

9. Produktionseinrichtung nach einem der Ansprüche 1 bis 8 **dadurch gekennzeichnet, dass** der Standard-Transportcontainer (10) Befestigungsstellen (28) zur Befestigung eines gleichartig dimensionierten zusätzlichen Standard-Transportcontainers (30) und/oder eines Zusatzaggregats, insbesondere Kryoanlage, oberhalb, unterhalb und/oder seitlich mit dem Standard-Transportcontainer (10) ausweist, wobei insbesondere eine Zusatz-Multikupplung zum Austausch von Stoff und/oder Energie und/oder Information des zusätzlichen Standard-Transportcontainers (30) und/oder des Zusatzaggregats mit den Prozessaggregaten (12) vorgesehen ist.

10. Verwendung eines Standard-Transportcontainers (10), insbesondere nach DIN ISO 668, zur Durchführung einer chemischen Reaktion innerhalb des Standard-Transportcontainers (10) mit einem innerhalb des Standard-Transportcontainers (10) angeordnetem Versorgungsnetz (14) zur Versorgung von Prozessaggregaten (12) mit Stoff und/oder Energie und/oder Information, wobei der Standard-Transportcontainer (10) in einer Produktionseinrichtung (8) nach einem der Ansprüche 1 bis 9 verwendet wird.

## Claims

1. Production arrangement for performing a chemical reaction, comprising
a standard transport container (10), in particular in accordance with DIN ISO 668, for receiving multiple processing units (12) arranged within the standard transport container (10), for assisting and/or performing a basic chemical-engineering operation, and
a supply network (14), arranged within the standard transport container (10), for supplying the processing units (12) with material and/or energy and/or information,
**characterized in that** the supply network (14) is arranged above the processing units (12), in the direction of gravitational force, for supplying the processing units (12) from above.

2. Production arrangement according to Claim 1, **characterized in that** the supply network (14) allows the availability of material and/or energy and/or information over a large region of the standard transport container (10) to be ensured in such a way that it is possible to re-use the standard transport container (10) with the supply network (14) for different configurations of processing units (12) and, in the event of a modification for performing a different chemical reaction, just to exchange the processing units (12).

3. Production arrangement according to Claim 1 or 2, **characterized in that** the standard transport container (10) has a multi-coupling (18) for coupling to a docking station (20) of a backbone structure for the exchange of material and/or energy and/or information, the multi-coupling (18) being connectable to the processing units (12), in particular by way of the supply network (14).

4. Production arrangement according to one of Claims 1 to 3, **characterized in that** a wastewater line for the removal of wastewater, product or other materials is provided within the standard transport container (10), the wastewater line extending through at least two designated processing units (12), the wastewater line being connectable or unconnectable to the respective processing unit (12).

5. Production arrangement according to one of Claims 1 to 4, **characterized in that** the standard transport container (10) has stiffening transverse beams (22) and/or longitudinal beams, the center lines of the transverse beams (22) being arranged spaced apart from one another by a distance d_{L,min} and/or the longitudinal beams being arranged spaced apart from one another by a distance d_{Q,min}, the transverse beams (22) and/or longitudinal beams being designed for securing to at least one processing unit (12).

6. Production arrangement according to one of Claims 1 to 5, **characterized in that** within the standard transport container (10) there are arranged multiple processing units (12) for performing the chemical reaction that are secured to the standard transport container (10), the respective processing unit (12) having an extent d_{L} in the longitudinal direction that corresponds substantially to an integral multiple Z_{L} of d_{L,min} and/or the respective processing unit (12) having an extent d_{Q} in the transverse direction that corresponds substantially to an integral multiple Z_{Q} of d_{Q,min}, with in particular d_{L,min} corresponding substantially to an integral part N_{L} of an extent L_{L} in the longitudinal direction of an interior space of the standard transport container (10) and/or d_{Q,min} corresponding to an integral part N_{Q} of an extent L_{Q} in the transverse direction of an interior space of the standard transport container (10).

7. Production arrangement according to one of Claims 1 to 6, **characterized in that** the standard transport container (10) has a floor that can be covered with light-admitting grilles (32), the floor being designed in particular for collecting running-out liquids, preferably in the form of a tray.

8. Production arrangement according to one of Claims 1 to 7, **characterized in that** the standard transport container (10) has at least one externally manipulable PCIT module (process control and instrumentation technology module) for influencing the operating mode of a processing unit (12) associated with the PCIT module, the standard transport container (10) and/or the PCIT module preferably being of an explosion-protected design.

9. Production arrangement according to one of Claims 1 to 8, **characterized in that** the standard transport container (10) has securing locations (28) for securing an identically dimensioned additional standard transport container (30) and/or an additional unit, in particular a cryogenic installation, to the top, bottom and/or side of the standard transport container (10), an additional multi-coupling for exchanging material and/or energy and/or information of the additional standard transport container (30) and/or the additional unit with the processing units (12) being provided in particular.

10. Use of a standard transport container (10), in particular in accordance with DIN ISO 668, for performing a chemical reaction within the standard transport container (10), comprising a supply network (14), arranged within the standard transport container (10), for supplying processing units (12) with material and/or energy and/or information, the standard transport container (10) being used in a production arrangement (8) according to one of Claims 1 to 9.

## Revendications

1. Dispositif de production destiné à réaliser une réaction chimique, et présentant
un récipient standard de transport (10), en particulier selon la norme DIN ISO 668, qui reprend plusieurs ensembles de traitement (12) disposés à l'intérieur du récipient standard de transport (10) et servant à soutenir et/ou à réaliser une opération technique de base du procédé et
un réseau d'alimentation (14) disposé à l'intérieur du récipient standard de transport (10) et destiné à alimenter les ensembles de traitement (12) en matière, en énergie et/ou en informations,
**caractérisé en ce que**
le réseau d'alimentation (14) est disposé dans la direction d'action de la gravité au-dessus des ensembles de traitement (12) en vue d'alimenter les ensembles de traitement (12) par leur tête.

2. Dispositif de production selon la revendication 1, **caractérisé en ce que** le réseau d'alimentation (14) peut assurer la disponibilité de matière, d'énergie et/ou d'informations sur une grande partie du récipient standard de transport (10) de manière à pouvoir réutiliser le récipient standard de transport (10) avec le réseau d'alimentation (14) pour différentes compositions de ensembles de traitement (12) et pour pouvoir ne remplacer que les ensembles de traitement (12) lors d'une transformation en vue de la mise en oeuvre d'une autre réaction chimique.

3. Dispositif de production selon les revendications 1 ou 2, **caractérisé en ce que** le récipient standard de transport (10) présente un accouplement multiple (18) permettant l'accouplement à un poste d'amarrage (20) d'une structure en colonne vertébrale servant à l'échange de matière, d'énergie et/ou d'informations, l'accouplement multiple (18) pouvant être relié au ensembles de traitement (12) en particulier par l'intermédiaire du réseau d'alimentation (14).

4. Dispositif de production selon l'une des revendications 1 à 3, **caractérisé en ce qu'**un conduit d'eau usée permettant l'évacuation d'eau usée, de produit ou d'autres substances est prévu à l'intérieur du récipient standard de transport (10), le conduit d'eau usée traversant au moins deux ensembles de traitement (12) désignés, le conduit d'eau usée pouvant être relié ou ne pouvant pas être relié à chaque ensembles d traitement (12).

5. Dispositif de production selon l'une des revendications 1 à 4, **caractérisé en ce que** le récipient standard de transport (10) présente des poutrelles transversales (22) et/ou des poutrelles longitudinales de renfort, les lignes centrales des $22 étant disposées à une distance mutuelle d_{L,min} et/ou les poutrelles longitudinales à une distance mutuelle d_{Q,min}, les poutrelles transversales (22) et/ou les poutrelles longitudinales étant associées à au moins un ensemble de traitement (12) en vue de sa solidification.

6. Dispositif de production selon l'une des revendications 1 à 5, **caractérisé en ce que** plusieurs ensembles de traitement (12) fixés au récipient standard de transport (10) sont disposés à l'intérieur du récipient standard de transport (10) en vue de la réalisation de la réaction chimique, chaque ensemble de traitement (12) présentant dans la direction longitudinale une extension d_{L} qui correspond essentiellement à un multiple entier Z_{L} de d_{L,min} et/ou **en ce que** chaque ensemble de traitement (12) présente dans la direction transversale une extension d_{Q} qui correspond essentiellement à un multiple entier Z_{Q} de d_{Q,min}, d_{L,min} correspondant essentiellement à une partie entière N_{L} d'une extension N_{L} dans la direction longitudinale de l'espace intérieur du récipient standard de transport (10) et/ou d_{Q,min} correspondant à une partie entière N_{Q} d'une extension N_{Q} dans la direction transversale de l'espace intérieur du récipient standard de transport (10).

7. Dispositif de production selon l'une des revendications 1 à 6, **caractérisé en ce que** le récipient standard de transport (10) présente un fond qui peut être recouvert par des grilles légères (32), le fond étant configuré en particulier pour reprendre des liquides sortant, de préférence en étant en forme de cuve.

8. Dispositif de production selon l'une des revendications 1 à 7, **caractérisé en ce que** le récipient standard de transport (10) présente au moins un module PLT (module de la technique de conduite de processus) qui peut être manipulé de l'extérieur et qui agit sur le mode de fonctionnement d'un ensemble de traitement (12) associé au module PLT, le récipient standard de transport (10) et/ou le module PLT étant de préférence protégés contre les explosions.

9. Dispositif de production selon l'une des revendications 1 à 8, **caractérisé en ce que** le récipient standard de transport (10) présente des emplacements de fixation (28) permettant de fixer un récipient standard de transport (30) supplémentaire dimensionné de manière similaire et/ou d'un ensemble supplémentaire, en particulier une installation cryogénique, au-dessus, en dessous et/ou à côté du récipient standard de transport (10), un multi-accouplement supplémentaire permettant l'échange de matière, d'énergie et/ou d'informations du récipient standard de transport (30) et/ou de l'ensemble supplémentaire avec les ensembles de traitement (12) étant prévu.

10. Utilisation d'un récipient standard de transport (10), en particulier conforme à la norme DIN ISO 668, en vue de la réalisation d'une réaction chimique à l'intérieur du récipient standard de transport (10), avec un réseau d'alimentation (14) disposé à l'intérieur du récipient standard de transport (10) pour alimenter les ensembles de traitement (12) en matière, en énergie et/ou en informations, le récipient standard de transport (10) étant utilisé dans un dispositif de production (8) selon l'une des revendications 1 à 9.
